# EUROPÄISCHE PATENTANMELDUNG

(11) **EP 4 732 976 A1**
(43) Veröffentlichungstag der Anmeldung: **29.04.2026**
(21) Anmeldenummer: 24208666.8
(22) Anmeldetag: 24.10.2024
(51) Int. Cl.: B23D 35/00, B65G 1/04, B65G 1/133

(54) **VORRICHTUNG, ANORDNUNG UND VERFAHREN ZUM AUTOMATISCHEN LAGERN VON RUNDMESSERN, DISTANZRINGEN UND AUSWERFERRINGEN**

(71) Anmelder: Heinrich Georg GmbH Maschinenfabrik, 57223 Kreuztal (DE)
(72) Erfinder: Bäumener, Tillmann, 57223 Kreuztal (DE)
(74) Vertreter: Moser Götze & Partner Patentanwälte mbB

(57) **Zusammenfassung**

Vorrichtung, Anordnung und Verfahren zum automatischen Lagern von zylindrischen Werkzeugen von Längsteilanlagen mit einer Lagervorrichtung, welche mindestens einen Turm mit mehreren radialen Armen in übereinander angeordneten Ebenen und ein verfahrbares Handhabungssystem für die Werkzeuge umfasst, in welcher Werkzeuge mittels des verfahrbaren Handhabungssystem auf den radialen Armen gelagert werden, und mit einer Steuerung, wobei die Steuerung programmiert ist, das Handhabungssystem derart anzusteuern, dass Werkzeuge eines bestimmten AußenDurchmessers jeweils auf ihnen zugeordneten radialen Armen gelagert werden und im Außen-Durchmesser kleinere Werkzeuge jeweils auf ihnen zugeordneten radialen Armen gelagert sind.

## Beschreibung

Die Erfindung betrifft eine Vorrichtung, eine Anordnung und ein Verfahren zum automatischen Lagern von zylindrischen Werkzeugen von Längsteilanlagen nach Anspruch 1 bzw. 11 und 12.

In sogenannten Längsteilanlagen werden Metallbänder in Längsrichtung in schmalere Streifen aufgetrennt. Dazu weisen diese üblicherweise Längsteilscheren auf, die als zylindrische Messerbalken bzw. Messerwellen ausgestaltet sind, auf denen hohle zylindrische Werkzeuge, wie Rollenscherenmesser, Distanzringe und Auswerferringe sowie ein Endanlagering aufgeschoben sind.

Dabei schneiden die Rollenschermesser das Material, die Auswerferringe führen das Material und die Distanzringe stellen die gewünschten Schnittbreiten und Schnittspalte ein. Die Endanlageringe bilden das Ende eines Werkzeugaufbaus und verhindern ein seitliches Verrutschen der Werkzeuge. Die Endanlageringe dienen als Druckringe und übertragen eine Spannkraft, welche mittels Hydraulikmutter aufgebracht wird und das gesamte Werkzeugpaket auf der Messerwelle festspannt. Durch die entsprechende Anordnung der Werkzeuge auf der Messerwelle ist eine Konfektion der Längsteilscheren möglich.

Die Längsteilscheren bzw. deren Werkzeuge werden oft auf Armen von Vorbaugerüsten vorkonfektioniert.

In diesem Zusammenhang ist es bekannt, die hohlen zylindrischen Werkzeuge auf Lagerarmen aufgeschoben vorzuhalten. Diese werden dann wunschgemäß entnommen und auf die Arme des Messervorbaugerüsts oder auf die zylindrischen Messerwellen aufgeschoben. Dies kann manuell oder auch robotergestützt erfolgen.

Dabei ist es bekannt, Vorrichtungen zum automatischen Lagern (Vorhalten) der hohlen zylindrischen Werkzeuge zu verwenden, welche mindestens einen drehbaren Karussellturm mit mehreren radialen Armen in übereinander angeordneten Ebenen aufweisen. Ein verfahrbarer Greifer handhabt die Werkzeuge zur Ablage bzw. Abnahme von den radialen Armen.

So ist von der Firma Make SRL (https://www.makeitaly.com ) ein sogenannter STAHL-2 Messerbauroboter mit Lager bekannt, in dem die Werkzeuge in einem Karusselturm auf radialen Armen gelagert werden, die in übereinander angeordneten Ebenen abwechselnd angeordnet sind, so dass die Arme in jeder zweiten Ebene vertikal fluchten. Die Lagerung erfolgt mit großem Abstand der Arme (vgl. https://www.youtube.com/watch?v=5e0BRORZaik bei 1:18 Minuten) Auch die Firma Scandanavian Robotics AB (https://www.scanrobotics.se/en/2018/12/14/new-developed-robot-system/) bietet ähnliche Systeme an.

Aus der DE 10 2014 014918 A1 sind z. B. Greifer bekannt, die dazu verwendet werden, um die entsprechenden Werkzeuge handzuhaben.

Demgegenüber besteht die Aufgabe der vorliegenden Erfindung darin, eine verbesserte Lagerung zu ermöglichen.

Diese Aufgabe wird durch die in Anspruch 1 wiedergegebene Vorrichtung sowie der Anordnung nach Anspruch 11 und dem Verfahren nach Anspruch 12 gelöst. Vorteilhafte Ausgestaltungen ergeben sich aus den Unteransprüchen und der Beschreibung.

Erfindungsgemäß ist erkannt worden, dass wenn die Steuerung programmiert ist, das Handhabungssystem derart anzusteuern, dass Werkzeuge eines bestimmten Außen-Durchmessers jeweils auf nur ihnen zugeordneten radialen Armen gelagert werden und im Außen-Durchmesser kleinere Werkzeuge jeweils auf nur ihnen zugeordneten radialen Armen gelagert sind, es möglich wird, eine besonders kompakte bzw. raumoptimierte Lagerung der Werkzeuge zu erreichen.

Mit anderen Worten, es wird das Werkzeuglager in zwei verschiedene Lagerplatztypen eingeteilt. Auf den ersten Lagerplätzen werden nur Rollenscherenmesser und Auswerferringe gelagert. Die zweiten Lagerplätze sind wiederum ausschließlich für Distanzringe und Endanlageringe vorgesehen. Da die Distanzringe bzw. Endanlageringe einen kleineren Außendurchmesser als die Rundmesser und Auswerferringe haben, kann der Abstand der Lagerplätze durch die gezielte Lagerung der Werkzeuge optimiert werden, immer mit dem Gedanken, dass möglichst alle Lagerplätze belegt werden, um ein möglichst kleines Gesamtmaß umzusetzen.

Dadurch können die Lagerplätze näher aneinander platziert werden, so dass der ungenutzte Raum zwischen den Lagerplätzen gegenüber den bekannten Lagern verringert wird. Insbesondere kann so der vertikal benötigte Platz optimiert werden.

Die Werkzeuge sind insbesondere Rollenscherenmesser, Distanzringe und Auswerferringe sowie Endanlageringe, die in einer Längsteilanlage Verwendung finden.

Vorzugsweise sind die Lagerplätze der Art bzw. dem Typ nach fest zugeordnet. Es sind also bestimmte Lagerplätze immer mit Rollenscherenmessern und Auswerferringen belegt und Lagerplätze der anderen Art immer mit Distanzringen oder Endanlageringen.

In einer Ausführungsform sind die radialen Arme je Ebene identisch und/oder gleich beabstandet angeordnet. Es können pro Ebene mehrere, z. B. vier bis zehn, vorzugsweise acht, radiale Arme zur Lagerung verwendet werden.

Im Turm können mehrere, z. B. vier bis zehn, vorzugsweise fünf, Ebenen zur Lagerung verwendet werden.

Selbstverständlich können pro Vorrichtung bzw. Lager mehrere Türme vorgesehen werden.

Die radialen Arme stehen also von dem, ggf. gesteuert drehbaren, vertikalen Turm radial nach außen vor, so dass sie von dem seitlich heranfahrbaren Greifkopf eines Handhabungssystems bedient werden können, wenn der Turm oder die Ebene entsprechend verdreht wurde, um den entsprechenden radialen Arm zu präsentieren, der das gewünschte Werkzeug trägt bzw. aufnehmen soll.

Die radialen Arme können aus einer zentralen radial verlaufenden rohrförmigen Tragstange bestehen. Zusätzlich können links und rechts parallel dazu rohrförmige Stützstangen vorgesehen sein, die mit ihren Oberseiten in der radialen Ansicht gemeinsam mit der Tragstange teilkreisförmig angeordnet werden, um eine gute Auflage für die hohlen zylindrischen Werkzeuge auszubilden, die aufgeschoben sind. Die Tragstange und die Stützstangen können an dem Turm abgewandten Ende konisch zulaufen, um das Auffädeln der Werkzeuge zu vereinfachen. Auch können die Tragstange und die Stützstangen im Bereich der dem Turm abgewandten Enden miteinander verstrebt sein, z. B. durch eine Lasche.

Die Steuerung kann eingerichtet sein, das verfahrbare Handhabungssystem derart anzusteuern, dass die Werkzeuge größeren Außen-Durchmessers und die Werkzeuge kleineren Außen-Durchmessers auf abwechselnd zueinander liegenden radialen Armen gelagert sind. Somit kann die Lagerung besonders hinsichtlich des Abstands der radialen Arme optimiert werden.

Es können also die Lagerplatztypen abwechselnd angeordnet sein.

Die Steuerung kann auch programmiert sein, das Handhabungssystem derart anzusteuern, dass dieses Werkzeuge größeren Außen-Durchmessers jeweils auf von der Steuerung zugeordneten radialen Armen einer ersten Gruppe lagert und Werkzeuge kleineren Außen-Durchmessers jeweils auf von der Steuerung zugeordneten radialen Armen einer zweiten Gruppe lagert, wobei die radialen Armen der ersten Gruppe zu den radialen Armen der zweiten Gruppe abwechselnd zueinander angeordnet sind.

Die radialen Arme können über steuerbare Verstellmittel, wie Exzentermittel, am Turm gesteuert beweglich gelagert sein. Dies erlaubt eine Justierung der genauen Position der radialen Arme. So können die radialen Arme z. B. auf einer Exzenterbuchse jeweils separat motorisch verstellbar sein, um dadurch, je nach Größe der Werkzeuge, z. B. der Distanzringe, den Abstand zwischen den jeweiligen radialen Armen zu optimieren. Jeder radiale Arm kann also z. B. durch Befestigung mittels eines motorisch gesteuert einstellbaren Exzenters gelagert sein, welcher per Steuerung (z. B. Lagerhaltungssoftware) optimal auf den erforderlichen Abstand eingestellt werden könnte.

Die übereinander angeordneten Ebenen können einzeln gesteuert zueinander verdrehbar sein und/oder der gesamte Turm kann gesteuert verdrehbar sein. Mit anderen Worten, die Ebenen und/oder der Turm können über motorisch (von der Steuerung) gesteuerte einstellbare Antriebe verdreht werden, um z. B. dem Handhabungssystem die gewünschten radialen Arme zur Lagerung oder Übernahme eines bestimmten Werkzeugs zu ermöglichen.

Die einzelnen Ebenen des Turms können sich also mittels motorisch gesteuerter einstellbarer Antriebe etc. unabhängig voneinander drehen und sich positionieren lassen. Somit muss nicht immer der gesamte Turm mit allen Ebenen und dem gesamten Gewicht drehen, sondern nur eine Ebene. Die Werkzeugbereitstellung ist dann noch effizienter. Allerdings ist dann der Abstand zwischen den Lagerplatzebenen bzw. radialen Armen vertikal nicht so optimal, wie wenn der gesamte Turm dreht.

Die radialen Arme einer Ebene können (in der normalen unverdrehten Anordnung) direkt vertikal (senkrecht) über den radialen Armen der Ebene darunter bzw. darüber angeordnet sein.

Alle radialen Arme können dieselbe Länge aufweisen. Es ist aber auch möglich, die radialen Arme der kleineren bzw. schmaleren Werkzeuge, z. B. Distanzringe, kürzer auszugestalten.

Die kleineren bzw. schmaleren Werkzeuge, wie die Distanzringe und Endanlageringe, können so im vorderen Bereich der radialen Arme abgelegt werden, dass sie hinten nicht mit den längeren (bzw. breiteren) und größeren Rollenscherenmessern und Auswerferringen aneinanderstoßen. Hierzu können die radialen Arme mit Abstandhaltern ausgestattet sein, die je nach vorgesehenem Werkzeug in Längsrichtung der Arme positioniert sind, so dass das jeweilige Werkzeug entweder nicht am Turm anstößt und/oder nur im vorderen Bereich der radialen Arme gelagert werden kann, da das Werkzeug nicht zum Turm hin verrutschen kann.

Der Turm oder die Türme und auch ggf. das Handhabungssystem können in einer Einhausung angeordnet werden, um die Werkzeuge vor Umwelteinflüssen und Verschmutzung zu schützen. In der ggf. länglichen Einhausung können die Türme entlang einer Geraden angeordnet werden.

Die Vorrichtung kann auf einer Längsseite neben den Türmen einen Verfahrweg für das Handhabungssystem aufweisen, so dass dieser an die Türme herangefahren werden kann, um die Werkzeuge handzuhaben, Dies kann auch innerhalb der Einhausung vorgesehen sein.

Das Handhabungssystem kann neben der Längsfahrt auch in der Höhe verfahren werden, um alle Ebenen der radialen Arme zu erreichen.

Die Türme können auf einem innerhalb der Einhausung angeordneten Traggerüst montiert sein, wobei sie in dem Traggerüst vorzugsweise beidseitig, also oben und unten gelagert und geführt sind. Der Antrieb der Türme kann z. B. von oben angeflanscht sein oder auch im Turm integriert.

Das Handhabungssystem kann beim Verfahren unten und/oder oben am Traggerüst geführt und angetrieben werden. Dazu kann z. B. unten ein Zahnstangenantrieb implementiert werden und oben eine Linearführung. Das Handhabungssystem kann zusätzlich neben der Horizontal- und Vertikalfahrt auch teleskopierbar ausfahrbar ausgestaltet werden, um die aufgenommenen Werkzeuge auf die Arme des Vorbaugerüsts oder auf die Messerwelle aufzuschieben. Das Handhabungssystem weist vorzugsweise ebenfalls mindestens eine Tragschiene zum Werkzeugtransport und einen Abstreifer zum Entladen der Tragschiene auf.

Das Handhabungssystem kann einen Greifkopf umfassen, der mindestens zwei, vorzugsweise drei, radial ausfahrbare Greiffinger aufweist, die jeweils einen Winkel größer 90 Grad zwischen sich ausbilden und zwischen einer Ruhestellung und einer Greifstellung radial verfahrbar ausgestaltet sind, um in die Werkzeuge in der eingefahrenen Ruhestellung einzugreifen und in der ausgefahrenen Greifstellung spreizend zu greifen. Die Greiffinger können linear zwischen der Ruhestellung und der Greifstellung verfahrbar sein. Dies kann z. B. mittels eines Linearantriebs, z. B. Kniehebelmechanik, erfolgen. Die Greiffinger können jeweils eine keilförmige Spitze aufweisen. Die Greiffinger können jeweils über mindestens eine Druckluftdüse im Bereich ihrer Spitze bzw. im Bereich unterhalb des Keils (von der Spritze ausgebildet) verfügen, die mit Druckluft beaufschlagbar ist. Zusätzlich kann der Greifkopf eine Vibrationseinrichtung aufweisen, um die Greiffinger vibrieren zu lassen, um aneinanderhaftende Werkzeuge voneinander zu trennen. Die so aufgenommenen Werkzeuge können auf mindestens einer Tragschiene transportiert werden.

In der von dem Verfahrweg abgewandten Seite der Einhausung kann eine (ggf. verschließbare Öffnung) vorgesehen sein, durch die der Greifkopf des Handhabungssystems ein Messervorbaugerüst erreichen kann, um darauf befindliche Arme oder Messerwellen mit Werkzeugen zu ent- und versorgen. Dazu kann das Messervorbaugerüst mit dem zu bestückenden Arm bzw. Messerwelle in die Einhausung eintauchend verfahren werden. Alternativ ist es möglich, dass der Greifkopf entsprechend weit ausgefahren werden kann, um den Arm bzw. die Messerwelle ohne deren eintauchen zu erreichen.

Ferner ist es möglich, das gesamte Lager bzw. die Einhausung auf einem Verfahrrahmen zu platzieren, so dass die Einhausung relativ zu dem Messervorbaugerüst beweglich ist. Dies erleichtert eine Nachrüstung.

An oder in der Einhausung kann auch eine automatische Werkzeugwaschanlage angeschlossen sein. Auch kann eine automatische Werkzeugprüf- und/oder Wartungsanlage vorhanden sein, um die Werkzeuge z. B. zu vermessen und/oder nachzuschleifen oder ggf. auszusondern etc.

Die Erfindung betrifft auch eine entsprechende Anordnung aus einer zuvor beschriebenen Vorrichtung und von zylindrischen Werkzeugen von Längsteilanlagen, wie Rollenscherenmessern, Distanzringen und Auswerferringen sowie Endanlageringen, wobei der Abstand zwischen den vertikal (senkrecht) übereinander angeordneten radialen Armen etwa dem Innendurchmesser und der Wandstärke der Rollenscherenmesser bzw. Auswerferringe plus der Wandstärke der Distanzringe entspricht.

"Etwa" heißt hier, dass zusätzlich ein geringer Spalt von mehr als 5 mm und weniger als 20 mm, vorzugsweise im Bereich von 15 mm, als zusätzlicher Abstand zwischen den vertikal (senkrecht) übereinander angeordneten radialen Armen bzw. den darauf liegenden Werkzeugen vorgesehen wird, damit diese besser separierbar und/oder greifbar sind.

Die Erfindung betrifft auch ein entsprechendes Verfahren zum Lagern von zylindrischen Werkzeugen von Längsteilanlagen in einer Vorrichtung, die mehrere in vertikal übereinander angeordneten Ebenen angeordnete radiale Arme zum Lagern der Werkzeuge aufweist, und Werkzeuge eines größeren Außen-Durchmessers jeweils auf ihnen zugeordneten ersten radialen Armen gelagert werden und im Außen-Durchmesser kleinere Werkzeuge jeweils auf ihnen zugeordneten zweiten radialen Armen gelagert werden.

Dabei können alle radialen Arme je Ebene und Reihe identisch und gleich beabstandet angeordnet sein und die ersten radialen Armen zu den zweiten radialen Armen horizontal und vertikal abwechselnd angeordnet sein.

Weitere Details der Erfindung ergeben sich aus der nachfolgenden Beschreibung von Ausführungsbeispielen anhand der Zeichnung, in der
- Fig. 1: eine schematische perspektivische Ansicht einer Vorrichtung zum automatischen Lagern von zylindrischen Werkzeugen von Seite des Handhabungssystems mit geöffneter Einhausung;

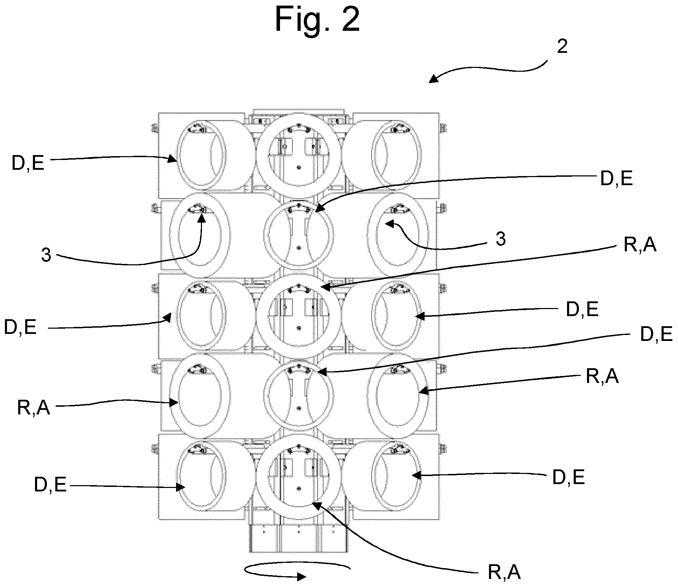

- Fig. 2: eine schematische Seitenansicht eines mit Werkzeugen belegten Turms aus Figur 1;
- Fig. 3: eine Draufsicht von oben auf den Turm aus Figur 2;

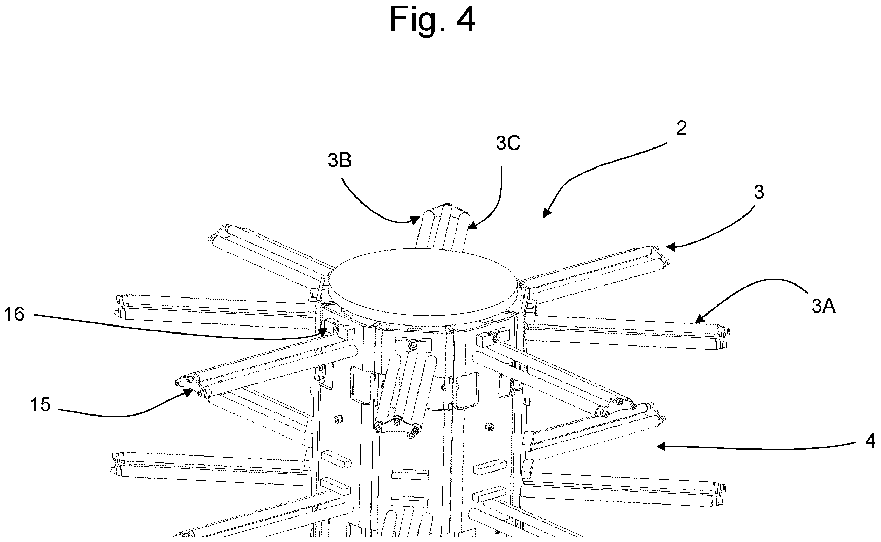

- Fig. 4: eine schematische perspektivische Ansicht auf den oberen Bereich eines unbelegten Turms aus Figur 1;
- Fig. 5: eine schematische perspektivische Ansicht auf das Handhabungssystem aus Figur 1;

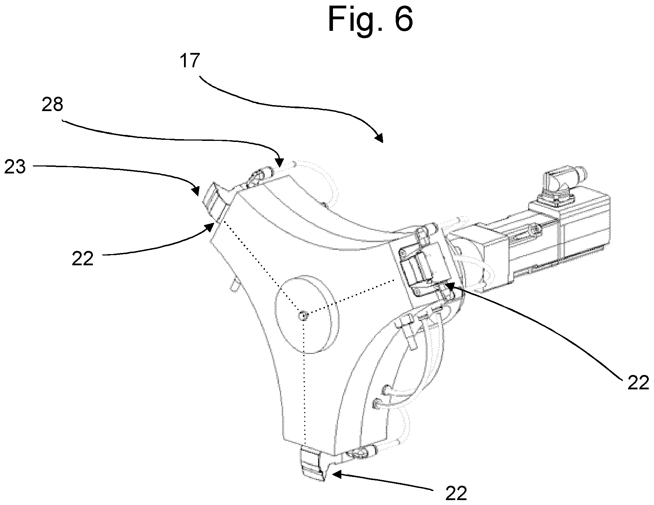

- Fig. 6: eine schematische perspektivische Ansicht auf den Greifkopf aus Figur 5;

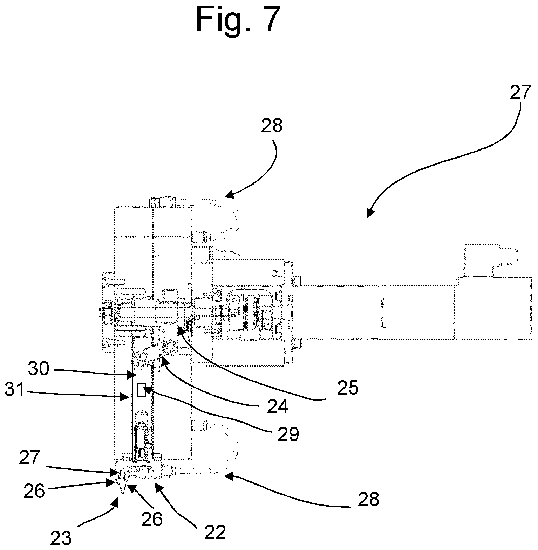

- Fig. 7: eine Schnittansicht auf den Greifkopf aus Figur 5; und
- Fig. 8 und 9: eine schematische Seitenansicht im Bereich der oberen Greiffinger beim Handhaben eines Distanzrings sowie
- Fig. 10: eine schematische Seitenansicht im Bereich eines abweichenden unteren Greiffingers zeigen.

In den Figuren ist eine als Ganzes mit 1 bezeichnete Vorrichtung zum automatischen Lagern von zylindrischen Werkzeugen dargestellt.

Die Vorrichtung 1 umfasst mehrere drehbare und entlang einer Geraden angeordnete Türme 2 mit mehreren radialen Armen 3 in übereinander angeordneten Ebenen 4 und einem entlang der Türme 2 vertikal verfahrbaren Handhabungssystem 5 für die Handhabung der Werkzeuge und eine Steuerung 1000 zur Steuerung der gesamten Vorrichtung.

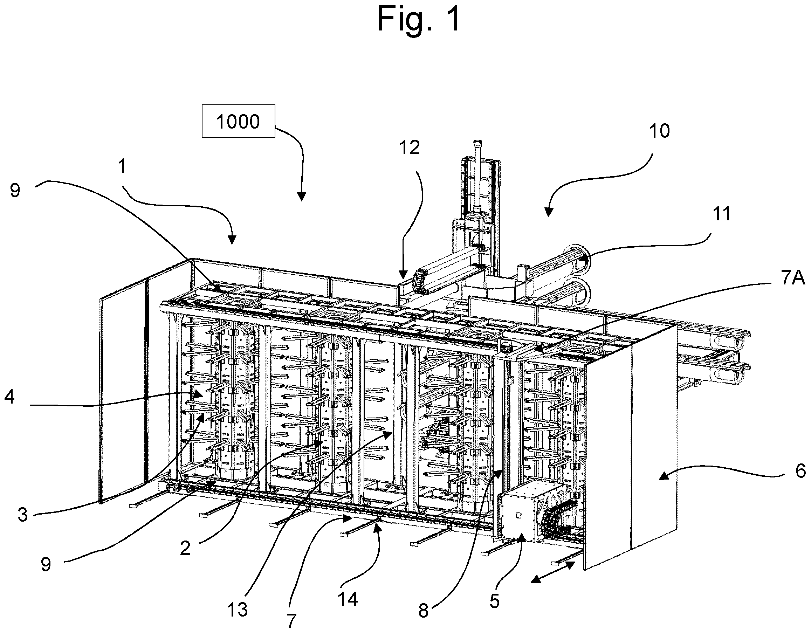

Die Türme 2 und auch das Handhabungssystem 5 befinden sich in einer, ggf. mobilen, Einhausung 6, um die Werkzeuge vor Umwelteinflüssen und Verschmutzung zu schützen. In Figur 1 ist zur besseren Übersicht eine Längsseite und die Oberseite der Einhausung 6 weggelassen.

Die Werkzeuge sind Rollenscherenmesser R, Distanzringe D und Auswerferringe A sowie Endanlageringe E, die in einer Längsteilanlage Verwendung finden.

Die Einhausung 6 weist auf einer Längsseite neben den Türmen 2 einen unteren Verfahrweg 7 für das Handhabungssystem 5 auf, so dass dieses innerhalb der Einhausung 6 an die Türme 2 herangefahren werden kann, um die Werkzeuge handzuhaben.

Das Handhabungssystem 5 kann neben der Längsfahrt auch in der Höhe an einem Mast 8 verfahren werden, um alle Ebenen der radialen Arme 3 zu erreichen.

Die Türme 2 sind auf einem innerhalb der Einhausung 6 angeordneten Traggerüst 9 montiert, wobei sie in dem Traggerüst beidseitig, also oben und unten gelagert und geführt sind. Der gesteuerte Antrieb zum Drehen der Türme 2 ist von oben vom Traggerüst 9 her angeflanscht.

Das Handhabungssystem 5 ist beim Verfahren am Traggerüst 9 unten am Verfahrweg 7 und oben an einer Führung 7A geführt und angetrieben. Dazu ist sowohl unten wie oben ein Zahnstangenantrieb implementiert und oben sowie unten eine Linearführung vorgesehen.

Das Handhabungssystem 5 ist zusätzlich neben der Horizontal- und Vertikalfahrt auch (weiter) ausfahrbar ausgestaltet, um die aufgenommenen Werkzeuge auf die Arme 11 eines Messervorbaugerüst 10 oder auf die Messerwelle aufzuschieben.

In der von dem Verfahrweg 7 abgewandten Seite der Einhausung 6 ist eine verschließbare Öffnung 12 vorgesehen, durch die das Handhabungssystem 5 bzw. dessen Greifkopf 17 das Messervorbaugerüst 10 erreichen kann, um darauf befindliche Arme 11 oder Messerwellen mit Werkzeugen zu ent- und versorgen. Korrespondierend zur Öffnung 12 ist zwischen den Türmen 2 eine Lücke 13 vorgesehen, so dass der Greifkopf 17 des Handhabungssystems 5 hindurchgeführt werden kann.

Dazu kann das Messervorbaugerüst 10 mit dem zu bestückenden Arm 11 bzw. Messerwelle in die Einhausung 6 eintauchend verfahren werden.

Alternativ ist es möglich, dass das Handhabungssystem 5 bzw. dessen Greifkopf 17 entsprechend weit ausgefahren werden kann, um den Arm 11 bzw. die Messerwelle ohne deren eintauchen zu erreichen.

Die gesamte Einhausung 6 inkl. aller Komponenten ist auf einem Verfahrrahmen 14 platziert, so dass die Einhausung 6 relativ zu dem Messervorbaugerüst 10 beweglich ist.

Jeder Turm 2 kann gesteuert über motorisch gesteuerte einstellbare Antriebe verdreht werden, um dem Handhabungssystem 5 die gewünschten radialen Arme 3 zur Lagerung oder Übernahme eines bestimmten Werkzeugs R, A, E, D zu präsentieren. Die radialen Arme 3 stehen von dem gesteuert drehbaren vertikalen Turm 2 radial nach außen vor, so dass sie von dem seitlich heranfahrbaren Handhabungssystem 5 bedient werden können, wenn der Turm 2 entsprechend verdreht wurde, um den entsprechenden radialen Arm 3 zu präsentieren, der das gewünschte Werkzeug R, A, E, D trägt bzw. aufnehmen soll. Der Verfahrweg 7 des Handhabungssystems 5 ist entsprechend positioniert.

Die radialen Arme 3 bestehen aus einer zentralen radial verlaufenden rohrförmigen Tragstange 3A. Zusätzlich sind links und rechts parallel zur Tragstange 3A rohrförmige Stützstangen 3B, C vorgesehen, die mit ihren Oberseiten in der radialen Ansicht gemeinsam mit der Tragstange 3A teilkreisförmig angeordnet sind, um eine gute Auflage für die hohlen zylindrischen Werkzeuge R, A, E, D auszubilden.

Die Tragstange 3A und die Stützstangen 3B, C laufen an dem Turm 2 abgewandten Ende konisch zu, um das Auffädeln der Werkzeuge R, A, E, D zu vereinfachen. Auch sind die Tragstange 3A und die Stützstangen 3B, C im Bereich der dem Turm 2 abgewandten Enden miteinander durch eine Lasche 15 verstrebt.

Vorliegend sind die radialen Arme 3 je Ebene 4 identisch und gleich beabstandet angeordnet. Es sind pro Ebene 4 acht radiale Arme 3 zur Lagerung vorgesehen und jeder Turm 2 weist fünf Ebenen 4 zur Lagerung auf. Alle radialen Arme 3 weisen dieselbe Länge auf.

Die radialen Arme 3 einer Ebene 4 stehen direkt vertikal (senkrecht) über den radialen Armen 3 der Ebene 4 darunter bzw. darüber.

Die kleineren bzw. schmaleren Werkzeuge, wie die Distanzringe D oder Endanlageringe E, können vom Greifkopf 17 so im vorderen Bereich der radialen Arme abgelegt bzw. platziert werden, dass sie hinten nicht mit den längeren (bzw. breiteren) und größeren Rollenscherenmessern R und Auswerferringen A aneinanderstoßen.

Hierzu sind die radialen Arme 3 mit Abstandhaltern 16 ausgestattet, die je nach vorgesehenem Werkezeug in Längsrichtung der radialen Arme 3 positioniert sind, so dass das jeweilige Werkzeug entweder nicht am Turm 2 anstößt und/oder nur im vorderen Bereich der radialen Arme 3 gelagert werden kann, da es nicht zum Turm 2 hin verrutschen kann.

Die Steuerung 1000 ist programmiert die gesamte Vorrichtung zu steuern, was auch die Belegung der durch die radialen Arme 3 ausgebildeten Lagerplätze und die Bewegungen der Turme 2 und des Handhabungssystems 5 umfasst.

Die Steuerung 1000 steuert das Handhabungssystem 5 derart an, dass Werkzeuge R, A eines bestimmten Außen-Durchmessers, nämlich Rollenscherenmesser R und Auswerferringe A jeweils auf nur ihnen zugeordneten radialen Armen 3 eines Turms 2 gelagert werden und im Außen-Durchmesser kleinere Werkzeuge, nämlich Distanzringe D und Endanlageringe E jeweils auf nur ihnen zugeordneten radialen Armen 3 gelagert werden.

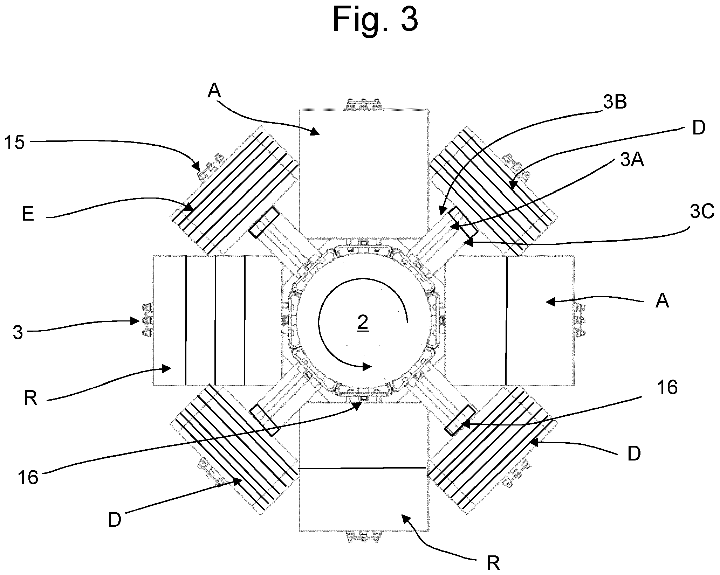

Es versteht sich, dass je nach Werkzeuglänge mehrere Werkzeuge hintereinander auf demselben radialen Arm 3 bzw. Lagerplatz gelagert werden. Dies trifft insbesondere für die schmalen Distanzringe D und Endanlageringe E (vgl. Figur 3) zu. Diese sind meist mehrfach hintereinander gelagert. Die breiteren Rollenscherenmesser R und Auswerferringe A werden jedoch ebenfalls je nach Breite oft doppelt oder mehrfach hintereinander gelagert werden.

Das Werkzeuglager ist also in zwei verschiedene Lagerplatztypen eingeteilt. Auf den ersten Lagerplätzen werden nur Rollenscherenmesser R und Auswerferringe A gelagert. Die zweiten Lagerplätze sind wiederum ausschließlich für Distanzringe D und Endanlageringe E vorgesehen.

Da die Distanzringe D bzw. Endanlageringe E einen kleineren Außendurchmesser als die Rundmesser und Auswerferringe haben, kann der Abstand der Lagerplätze bzw. der radialen Arme 3, die die Lagerplätze ausbilden, durch die gezielte Lagerung der Werkzeuge optimiert werden, immer mit dem Gedanken, dass möglichst alle Lagerplätze belegt werden, um ein möglichst kleines Gesamtmaß umzusetzen.

Dadurch können die Lagerplätze bzw. radialen Arme 3 näher aneinander platziert werden, so dass der ungenutzte Raum zwischen den Lagerplätzen gegenüber den bekannten Lagern verringert wird. Insbesondere ist so der vertikal benötigte Platz optimiert.

Die Belegung der radialen Arme 3 bzw. Lagerplätze der Art bzw. dem Typ nach sind fest zugeordnet. Es sind also bestimmte Lagerplätze bzw. radiale Arme 3 immer mit Rollenscherenmessern R und Auswerferringen A belegt und Lagerplätze bzw. radialen Arme 3 der anderen Zuweisung immer mit Distanzringen D oder Endanlageringen E. Die Lagerplatztypen sind abwechselnd angeordnet.

Daher ist der Abstand zwischen den vertikal (senkrecht) übereinander angeordneten radialen Armen 3, also der Abstand zwischen den Ebenen 4, etwa auf eine Größe eingestellt, die dem Innendurchmesser und der Materialstärke der Rollenscherenmesser R bzw. Auswerferringe A plus der Materialstärke der Distanzringe D bzw. der Endanlageringe E entspricht. Hinzu kommt ein kleines Spaltmaß von ca. 15 mm, um das Greifen zu ermöglichen bzw. das Stoßen zu verhindern.

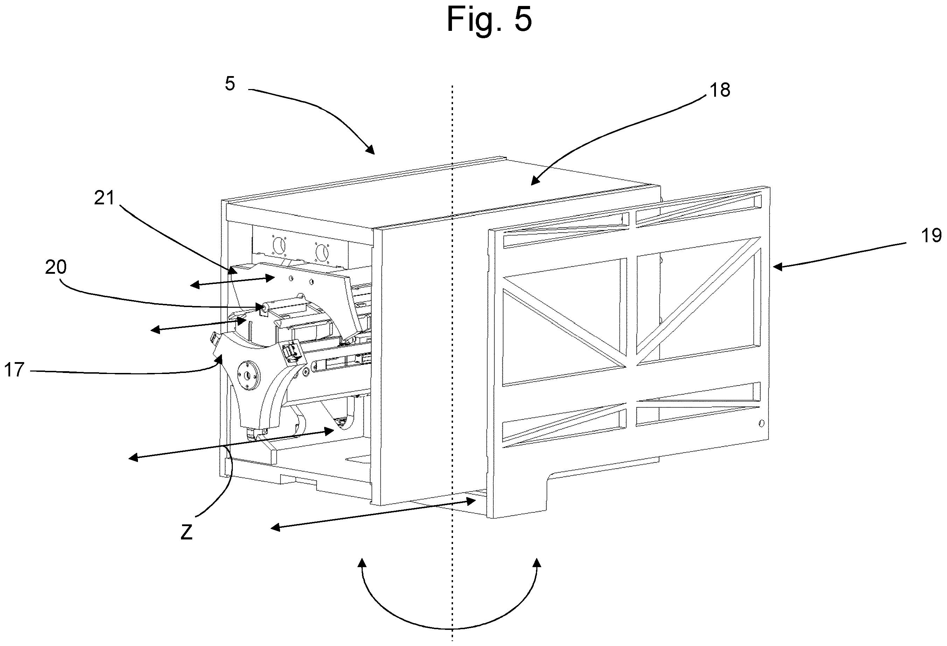

Das Handhabungssystem 5 ist nicht nur linear horizontal entlang des Verfahrwegs 7 und vertikal entlang des Masts 8 verfahrbar, sondern umfasst auch einen Greifkopf 17, der aus einem Gehäuse 18 linear ein- und aus-teleskopierbar ausgestaltet ist. Das Handhabungssystem 5 kann zusätzlich eine senkrechte Rotationsachse aufweisen (vgl. Figur 5), so dass es möglich wird, Werkzeuge ggf. an eine gegenüberliegende Wand abzulegen.

Das Gehäuse 18 ist über eine Befestigungsplatte 19 am Mast 8 verfahrbar befestigt. Das Gehäuse 18 und die Befestigungsplatte 19 sind ebenfalls relativ zueinander linear beweglich, um die Reichweite zu erhöhen, um z. B. durch die Lücke 13 hindurch den Arm 11 des Messervorbaugerüsts 10 zu erreichen.

Die Linearbewegungen werden durch Zahnstangenantriebe, Spindelantriebe, Elektrozylinder und Linearachsen ausgeführt.

Der Greifkopf 17 ist in dem Gehäuse 18 unterhalb einer linear ein- und ausfahrbaren Tragschiene 20 angeordnet, die zum eigentlichen Transport der ergriffenen Werkzeuge dient. Oberhalb der Tragschiene 20 ist ein ebenfalls linear beweglicher Schieber 21 angeordnet, der zum Herunterschieben der auf der Tragschiene 20 transportierten Werkzeuge dient.

Der Greifkopf 17 umfasst drei radial (linear) ausfahrbare Greiffinger 22, die jeweils einen 120 Grad Winkel zwischen sich ausbilden und jeweils eine keilförmige Spitze 23 aufweisen.

Die Greiffinger 22 sind Y-förmig angeordnet, so dass keine Kollision beim Aufnehmen und Ablegen mit den radialen Armen 3 bzw. der Tragschiene 20 oder dem Arm 11 des Messervorbaugerüsts 10 erfolgt.

Die Greiffinger 22 sind zwischen einer Ruhestellung und einer Greifstellung radial verfahrbar ausgestaltet sind, um in die Werkzeuge in der Greifstellung zu ergreifen.

Die gesteuerte Linearbewegung der Greiffinger 22 in ihrer Führung 31 im Greifkopf 17 erfolgt mittels einer Kniehebelmechanik 24 und die Kniehebelmechanik 24 wird über einen Kugelgewindeantrieb 25 verstellt. Durch den Kugelgewindeantrieb 25 kann die Kniehebelmechanik 24 stufenlos und genau bewegt werden.

Die Kniehebelmechanik 24 greift dabei an einen Greiffingerkörper 30 an, der im Greifkopf 17 geführt ist und an dessen Ende das eigentlich mit dem Werkzeug wechselwirkende Ende (z. B. Spitze 23) angeordnet ist.

Der Greifkopf 17 ist ausgestaltet, um alle Arten von hohlen zylindrischen Werkzeugen von Längsteilanlagen zu handhaben.

Er kann also angesteuert werden, um einzelne hohle zylindrische Werkzeuge aus einer Gruppe von aneinander liegenden Werkzeugen ohne Verringerung der Wandstärke am Innenrand, also Distanzringe D und Endanlageringe E, zu ergreifen. Diese sind besonders schwierig handzuhaben, da sie anders als Rollenscherenmesser R und Auswerferringe A keine Schmutzrille aufweisen, die eine Art Eingriffstasche ausbildet und zum Aneinanderhaften neigen.

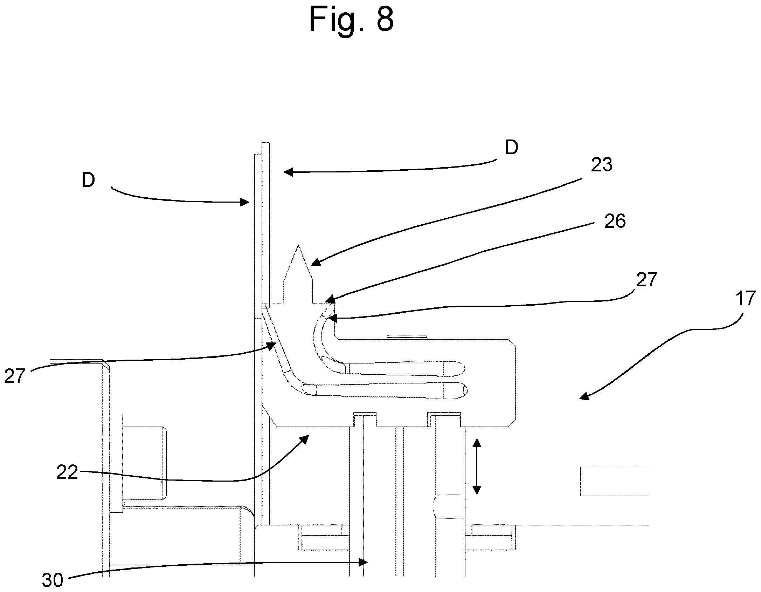

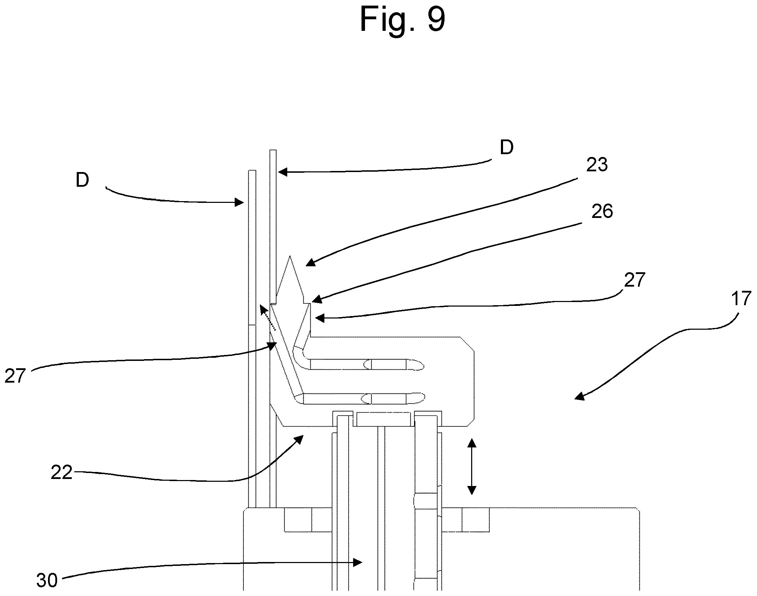

Um diese zu greifen, erfolgt ein Einführen des Greifkopfs 17 mit eingezogenen Greiffingern 22 in der Ruhestellung in das jeweilige hohle zylindrische Werkzeug und anschließend ein Aufspreizen durch Ausfahren der Greiffinger 22 in die Greifstellung mittels der Kniehebelmechanik 24, wobei der jeweilige Greiffingerkörper 30 in der Führung 31 radial gesteuert bewegt wird, um das jeweilige Werkzeug D, E von innen klemmend zu halten (vgl. Figur 8 und 9).

Anschließend kann der Greifkopf 17 zurückgezogen werden und das Werkzeug an die Tragschiene 20 übergeben werden. Diese kann - je nach Bedarf - vorpositioniert werden. Anschließend können sowohl der Greifkopf 17 als auch die mit dem Werkzeug belegte Tragschiene 20 in das Gehäuse 18 zum geschützten Transport eingezogen werden.

Die Greiffinger 22 weisen zum besseren spreizenden Klemmen am Übergang zu den keilförmigen Spitzen 23 einen äußeren und inneren Klemmabsatz 26 auf. In diesem Bereich haben auch Druckluftdüsen 27 ihren Ausgang. Das eigentliche Klemmen erfolgt mittels spannbacken-artiger Anlage der Klemmabsätze 26 von innen gegen die innere zylindrische Wandung des Werkzeugs.

Der Greifkopf 17 kann auch angesteuert werden, um solche Werkzeuge mit Verringerung der Wandstärke am Innenrand, also Rollenscherenmesser R und Auswerferringe A zu ergreifen. Dazu erfolgt ein Einführen mit den eingezogenen Greiffingern 22 in der Ruhestellung und Hindurchführen. Dann werden die Greiffinger 22 radial ausgefahren, um in der Greifstellung die Werkzeuge zu hintergreifen, wobei die keilförmigen Spitzen 23 der Endbereiche zwischen die Werkzeuge eingreifen und diese trennen.

Die Druckluftdüsen 27 erlauben den Greiffingern 22 eine gerichtete abstoßende Kraft zu erzeugen, um an dem Werkzeug haftende benachbarte Werkzeuge davon besser zu lösen.

Genauer gesagt liegen die Ausgänge der Druckluftdüsen 27 im Bereich unterhalb der keilförmigen Spitze 23 am Klemmabsatz 26 und werden mit Druckluft über eine Leitung 28 beaufschlagt.

Die Druckluftdüsen 27 sind in axialer-radialer Richtung schräg von Innen nach Außen in Zugriffsrichtung (Pfeil Z in Figur 5) und entgegengesetzt verlaufend ausgerichtet, um das Ablasen zu verbessern. Die Druckluftzufuhr über die Leitung 28 erfolgt gesteuert kontinuierlich und/oder pulsierend oder stoßweise, je nach Bedarf und Einstellung mittels der Steuerung 1000, aus einer nicht dargestellten Druckluftquelle, wie z. B. einem Kompressor, der auch im Handhabungssystem 5 integriert sein kann.

Zur Unterstützung der einzelnen Handhabung und Trennung der Werkzeuge voneinander weist der Greifkopf 17 zusätzlich je Greiffinger 22 eine Vibrationseinrichtung 29 auf, die innerhalb des Greiffingerkörpers 30 integriert ist. Die Vibrationseinrichtung 29 (Vibrationsmotor) versetzt gezielt die Greiffinger 22 in Vibration. Somit kann die Vibration kontrolliert auf die Werkzeuge übertragen werden. Dann können die Werkzeuge durch das so entstehende Schütteln beim Greifen zusätzlich getrennt werden.

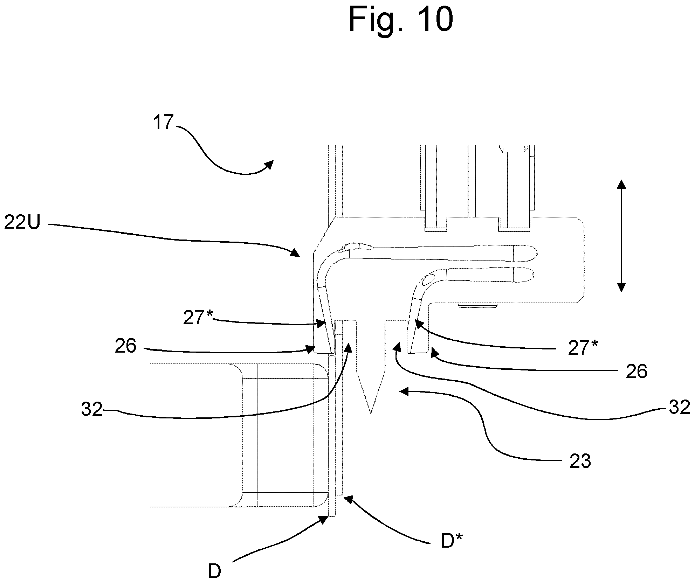

Wie in Figur 10 dargestellt, ist es möglich, dass der untere Greiffinger 22U abweichend ausgestaltet ist. Dazu kann dieser eine abweichende Erstreckung und neben der keilförmigen Spitze (Abschiebekeil) 23 und dem Klemmabsatz 26 auch eine Abschiebenut 32 aufweisen. Der Abschiebekeil 23 fluchtet dann mit denjenigen der übrigen Greiffinger 22 und der Klemmabsatz 26 ist davon durch die Abschiebenut 32 beabstandet, so dass der Klemmabsatz 26 weiter in Greifrichtung vorsteht, als die der übrigen Greiffinger 22. Somit wird es möglich, mit den übrigen (z. B. oberen) Greiffingern 22 das gewünschte Werkzeug D* (Distanzring) spreizend zu klemmen und somit zu greifen und gleichzeitig das ungewünschte hintere Werkzeug D mit dem versetzten Klemmabsatz 26 zurückzuhalten und das Greifen und Abziehen des gewünschten Werkzeugs durch die Abschiebenut 32 zu unterstützen.

Beim Spreizen wird demnach das gewünschte vordere Werkzeug D* durch den Klemmabsatz 26 der oberen Greiffinger 22 nach oben geschoben und entfernt sich somit von dem radialen Arm 3, auf dem es gelagert ist (vgl. Figuren 8 und 9).

Damit das hintere anhaftende Werkzeug D nicht mit nach oben rutscht, wird dieses von dem unteren Greiffinger 22U mit dessen versetztem Klemmabsatz 26 unten gehalten.

Dadurch, dass hintere anhaftende Werkzeug D vor die Druckluftdüsen der oberen Greiffinger 22 rutscht, steigt der Effekt mit der Druckluft, das dahinterliegende Werkzeug abzustoßen.

In diesem Fall fahren alle drei Greiffinger gleichzeitig und gleichmäßig aus. Sind die Greiffinger vollständig ausgefahren, wird das ungewünschte Werkzeug durch den Klemmabsatz des unteren Greiffingers gehalten oder eingeklemmt und der Greifkopf kann sich mit dem gewünschten Werkzeug wegbewegen.

Zusätzlich können die Druckluftdüsen 27* am Klemmabsatz 26 des unteren Greiffingers 22U abweichend ausgestaltet sein. Die Druckluftdüsen 27* sind umgekehrt als die übrigen in axialer-radialer Richtung schräg von Außen nach Innen in Zugriffsrichtung und entgegengesetzt verlaufend ausgerichtet, so dass die Druckluft zur keil-förmigen Spitze 23 (Abschiebekeil) hin ausgestoßen wird und auf das gewünschte Werkzeug D* wirkt.

Um unterschiedlichen Innendurchmessern der Werkzeuge zu begegnen und verschiedene Klemmkräfte auszubilden, sind die Greiffinger 22 hinsichtlich des Ausmaßes der Ausfahrlänge gesteuert radial verfahrbar ausgestaltet. Dabei besteht die Möglichkeit, die Kraft separat und individuell über die Steuerung 1000 einzustellen und bei wiederkehrenden Werkzeugen eine gezielte Voreinstellung für die beste Klemmkraft zu erreichen.

**Bezugszeichenliste**

| | | | |
|---|---|---|---|
| 1 | Vorrichtung | 30 | Greiffingerkörper |
| 2 | Turm | 31 | Führung |
| 3 | radialer Arm | 32 | Abschiebenut |
| 3A | Tragstange | 1000 | Steuerung |
| 3B, C | Stützstange | R | Rollenscherenmesser |
| 4 | Ebene | A | Auswerferring |
| 5 | Handhabungssystem | D, D* | Distanzring |
| 6 | Einhausung | E | Endanlagering |
| 7 | Verfahrweg | Z | Zugriffrichtung |
| 7A | Führung | | |
| 8 | Mast | | |
| 9 | Traggerüst | | |
| 10 | Messervorbaugerüst | | |
| 11 | Arm | | |
| 12 | Öffnung | | |
| 13 | Lücke | | |
| 14 | Verfahrrahmen | | |
| 15 | Lasche | | |
| 16 | Abstandhalter | | |
| 17 | Greifkopf | | |
| 18 | Gehäuse | | |
| 19 | Befestigungsplatte | | |
| 20 | Tragschiene | | |
| 21 | Schieber | | |
| 22, 22U | Greiffinger | | |
| 23 | Spitze | | |
| 24 | Kniehebelmechanik | | |
| 25 | Kugelgewindeantrieb | | |
| 26 | Klemmabsatz | | |
| 27, 27* | Druckluftdüse | | |
| 28 | Leitung | | |
| 29 | Vibrationseinrichtung | | |

## Patentansprüche

1. Vorrichtung (1) zum automatischen Lagern von zylindrischen Werkzeugen von Längsteilanlagen mit einer Lagervorrichtung, welche mindestens einen Turm (2) mit mehreren radialen Armen (3) in übereinander angeordneten Ebenen (4) und ein verfahrbares Handhabungssystem (5) für die Werkzeuge (R; E; A; D) umfasst, in welcher Werkzeuge mittels des verfahrbaren Handhabungssystems (5) auf den radialen Armen (3) gelagert werden, und mit einer Steuerung (1000),
**dadurch gekennzeichnet, dass** die Steuerung (1000) programmiert ist, das Handhabungssystem (5) derart anzusteuern, dass Werkzeuge (R; A) eines bestimmten Außen-Durchmessers jeweils auf ihnen zugeordneten radialen Armen (3) gelagert werden und im Außen-Durchmesser kleinere Werkzeuge (D; E) jeweils auf ihnen zugeordneten radialen Armen (3) gelagert sind.

2. Vorrichtung nach Anspruch 1, **dadurch gekennzeichnet, dass** die radialen Arme (3) je Ebene (4) identisch aufgebaut und gleich beabstandet angeordnet sind.

3. Vorrichtung nach Anspruch 1, **dadurch gekennzeichnet, dass** die radialen Arme (3) über steuerbare Verstellmittel, wie Exzentermittel am Turm (2) gesteuert beweglich gelagert sind.

4. Vorrichtung nach einem der vorhergehenden Ansprüche, **dadurch gekennzeichnet, dass** die übereinander angeordneten Ebenen (4) einzeln gesteuert zueinander verdrehbar sind und/oder der gesamte Turm (2) gesteuert verdrehbar ausgestaltet ist.

5. Vorrichtung nach einem der vorhergehenden Ansprüche, **dadurch gekennzeichnet, dass** pro Ebene (4) mehrere, insbesondere 4 bis 10, vorzugsweise acht radiale Arme (3) zur Lagerung vorhanden sind.

6. Vorrichtung nach einem der vorhergehenden Ansprüche, **dadurch gekennzeichnet, dass** im Turm (2) mehrere, insbesondere 4 bis 10, vorzugsweise fünf Ebenen (4) zur Lagerung vorhanden sind.

7. Vorrichtung nach einem der vorhergehenden Ansprüche, **dadurch gekennzeichnet, dass** die Steuerung (1000) eingerichtet ist, das verfahrbare Handhabungssystem (5) derart anzusteuern, dass die Werkzeuge (R, A) größeren Außen-Durchmessers und die Werkzeuge (D, E) kleineren Außen-Durchmessers auf zueinander abwechselnden radialen Armen (3) gelagert sind.

8. Vorrichtung nach einem der vorhergehenden Ansprüche, **dadurch gekennzeichnet, dass** die Steuerung (1000) programmiert ist, das Handhabungssystem (5) derart anzusteuern, dass dieser Werkzeuge (R, A) größeren Außen-Durchmessers jeweils auf von der Steuerung (1000) zugeordneten radialen Armen (3) einer ersten Gruppe lagert und Werkzeuge (E; D) kleineren Außen-Durchmessers jeweils auf von der Steuerung (1000) zugeordneten radialen Armen (3) einer zweiten Gruppe lagert, wobei die radialen Arme (3) der ersten Gruppe abwechselnd zu den radialen Armen (3) der zweiten Gruppe zueinander angeordnet sind.

9. Vorrichtung nach einem der vorhergehenden Ansprüche, **dadurch gekennzeichnet, dass** die radialen Arme (3) einer Ebene (4) direkt vertikal (senkrecht) über den radialen Armen (3) der Ebene (4) darunter angeordnet sind.

10. Vorrichtung nach einem der vorhergehenden Ansprüche, **dadurch gekennzeichnet, dass** alle radialen Arme (3) dieselbe Länge aufweisen.

11. Anordnung aus einer Vorrichtung nach einem der vorhergehenden Ansprüche und von zylindrischen Werkzeugen (R, E, A, D) von Längsteilanlagen, wie Rollenscherenmessern (R), Distanzringen (D) und Auswerferringen (A) sowie Endanlageringen (E), wobei der Abstand zwischen den vertikal (senkrecht) übereinander angeordneten radialen Armen (3) etwa dem Innendurchmesser und der Wandstärke der Rollenschermesser (R) bzw. Auswerferringe (A) plus der Wandstärke der Distanzringe (D) bzw. der Endanlageringe (E) entspricht.

12. Verfahren zum Lagern von zylindrischen Werkzeugen von Längsteilanlagen in einer Vorrichtung, insbesondere nach einem der vorhergehenden Ansprüche, wobei die Vorrichtung mehrere in vertikal übereinander angeordneten Ebenen (4) angeordnete radiale Arme (3) zum Lagern der Werkzeuge aufweist, und Werkzeuge (R, A) eines größeren Außen-Durchmessers jeweils auf ihnen zugeordneten ersten radialen Armen (3) gelagert werden und im Außen-Durchmesser kleinere Werkzeuge (D, E) jeweils auf ihnen zugeordneten zweiten radialen Armen (3) gelagert werden.

13. Verfahren nach Anspruch 12, **dadurch gekennzeichnet, dass** alle radialen Arme (3) je Ebene (14) und Reihe identisch und gleich beabstandet angeordnet sind und die ersten radialen Armen (3) zu den zweiten radialen Armen (3) horizontal und vertikal abwechselnd angeordnet sind.
